# EUROPÄISCHE PATENTANMELDUNG

(11) **EP 1 178 438 A1**
(43) Veröffentlichungstag der Anmeldung: **06.02.2002**
(21) Anmeldenummer: 00116198.3
(22) Anmeldetag: 03.08.2000
(51) Int. Cl.: G06T 17/00

(54) **Verfahren und System zum automatischen Überprüfen der Baubarkeit eines aus mehreren rechnergestützt konstruierten Bauteilen bestehenden Gesamtprodukts**

(71) Anmelder: Tecoplan AG, 85521 Ottobrunn (DE)
(72) Erfinder: Baginski, Boris, Dr., 81245 München (DE); Schnaus, Oliver, 85630 Grasbrunn (DE); Schneidewind, Bernd, 85640 Putzbrunn (DE); Thomson, Norman, 85540 Haar (DE)
(74) Vertreter: Banzer, Hans-Jörg, Dipl.-Ing.

(57) **Zusammenfassung**

Zur Erleichterung der Überprüfung der Baubarkeit eines aus mehreren rechnergestützt konstruierten Bauteilen bestehenden Gesamtprodukt wird vorgeschlagen, die den zu überprüfenden Bauteilen entsprechenden Bilddaten über ein Datenübertragungsnetz (6), insbesondere über das Internet, an eine Zentraleinheit (7) zu übertragen, wo die digitalen Bilddaten der einzelnen Bauteile zu einer digitalen Abbildung des Gesamtprodukts zusammengefügt und durch Auswertung der digitalen Abbildung die geometrische Passform der einzelnen Bauteile zentral überprüft wird. Die Funktionen der Zentraleinheit (7) können insbesondere in Form eines netz- oder webbasierten Dienstes angeboten werden, so dass von unterschiedlichsten geographischen Stellen aus digitale Bilddaten an einen als Zentraleinheit (7) dienenden Server übertragen und von diesem Server die Verifizierung der Baubarkeit des Gesamtprodukts übernommen werden kann.

## Beschreibung

Die vorliegende Erfindung betrifft ein Verfahren nach dem Oberbegriff des Anspruchs 1 und ein entsprechendes System nach dem Oberbegriff des Anspruchs 13 zum automatischen Überprüfen der Baubarkeit eines aus mehreren rechnergestützt konstruierten Bauteilen bestehenden Gesamtsprodukts.

Die Entwicklung komplex aufgebauter Produkte, wie beispielsweise eines Kraftfahrzeugs oder Flugzeugs, ist sehr langwierig und kostspielig. Ein wesentliches Problem bei der Entwicklung derartiger Produkte besteht darin, dass sie aus einer Vielzahl von unterschiedlichen Bauteilen aufgebaut sind, die in der Regel an unterschiedlichen Stellen konstruiert werden. Um die tatsächliche Funktionsfähigkeit des Gesamtprodukts überprüfen zu können, wurde früher ein Modell des Gesamtprodukts im Maßstab 1:1 nachgebaut. Diese Vorgehensweise ist jedoch sehr teuer und zeitintensiv und besitzt zudem den Nachteil, dass ein kaum veränderbares Modell geschaffen wird, d.h. der Funktionstest ist auf die konkrete Ausgestaltung der einzelnen Bauteile beschränkt.

Heutzutage wird die Entwicklung von komplex aufgebauten Produkten durch die moderne CAD-Technik (Computer Aided Design) erleichtert. Im Entwicklungsprozess werden die einzelnen Bauteile oder Bauteilgruppen in Übereinstimmung mit bestimmten Vorgaben an ihre Funktion und ihr Design rechnergestützt konstruiert, wobei hierzu beim Hersteller, beim Systemlieferanten und seinen Zulieferern nahezu zeitgleich eine Unmenge von dreidimensionalen CAD-Modellen (3D-CAD-Modellen) erstellt werden. Diese digitalen Modelle werden im Anschluss an die Konstruktion gefertigt und zu einem physikalischen Prototypen verbaut (Häufig wird heutzutage in verschiedenen Anwendungen auch auf den Prototypenbau verzichtet). Da die Fertigung auf detaillierte, nahezu perfekt konstruierte Pläne und Modelle angewiesen ist, wurde von den Konstrukteuren über Jahrzehnte hinweg verlangt, nur solche Modelle weiterzugeben, welche diesen Anforderungen entsprechen. Bis zu diesem Zeitpunkt ist die Arbeitsweise sehr stark einzelteilorientiert, d.h. der Konstrukteur erstellt sein Bauteil oder seine Baugruppe als Teil des Gesamtprodukts, ohne jedoch eine Aussage darüber machen zu können, ob die geometrische Stimmigkeit im Gesamtprodukt zu 100% abgesichert ist. Es können lediglich stichpunktartige, visuelle Kontrollen zur Produktstimmigkeit durchgeführt werden. Werden jedoch in dieser Phase Fehler, welche eine konstruktive Änderung eines Bauteils zur Folge haben, nicht gefunden, werden diese Fehler im weiteren Prozessverlauf auf die physikalischen Bauteile übertragen. Erst beim Zusammenbau der Einzelteile zum realen Prototypen werden diese Probleme sichtbar und können somit erst in einer relativ späten Entwicklungsphase behoben werden. Diese Unsicherheit im Entwicklungsprozess kann unter Umständen viel Geld kosten, da eine Serienproduktion in der Regel erst dann möglich ist, wenn sämtliche Probleme oder Fehler behoben und alle Tests abgeschlossen worden sind.

Auch die Informationsbeschaffung, die in der Konstruktion einen nicht unwesentlichen Zeitaufwand darstellt, ist ein nicht zu unterschätzender Kostenfaktor. Jeder Konstrukteur ist einen erheblichen Teil seiner Arbeitszeit damit beschäftigt, Informationen beispielsweise über die Konstruktionsumgebung, in der er sein Bauteil platzieren muss, zu beschaffen. Durch sogenanntes 'Simultaneous Engineering' kann zwar die Konstruktionszeit insgesamt reduziert werden. Gleichzeitig wird jedoch dadurch auch ein drastischer Anstieg der Informationsmenge hervorgerufen, so dass der Konstrukteur entweder noch mehr Zeit zur Informationsbeschaffung aufwenden oder aber mit der Unsicherheit leben muss, dass die ihm augenblicklich bekannte Konstruktionsumgebung sehr schnell veraltet ist.

Erfahrungsgemäß erhöht sich die Anzahl der oben beschriebenen Probleme mit zunehmender Komplexität des jeweiligen Produkts. Die Schleife vom physikalischen Prototypen zurück zur Konstruktion, welche viel Zeit und Kosten benötigt, muss bis zum Erreichen des gewünschten Ergebnisses mehrmals durchlaufen werden.

Um diese Probleme zu mindern, wurde die sogenannte Digital Mockup-Technik (DMU) entwickelt. Während sich CAD-Systeme auf einzelne Bauteile beziehen, erzeugen DMU-Systeme digitale Abbilder (sogenannte digital Mockups) des Gesamtprodukts, d.h. es werden alle auf CAD-Systemen konstruierten Bauteile miteinander zu einem digitalen Prototypen kombiniert, der nach seiner Fertigstellung auf bestimmte Eigenschaften getestet werden kann. Durch die Digitalisierung des Gesamtprodukts im CAD-System wird zwar eine nicht unwesentliche Beschleunigung des Entwicklungsprozesses erzielt, es bleibt jedoch weiterhin das Problem bestehen, dass Fehler erst nach Fertigstellung des Prototypen, d.h. nach Abschluss der eigentlichen Konstruktion ermittelt werden können. Der Wettbewerb auf globaler Ebene wird jedoch immer härter. Zur Sicherung der eigenen Wettbewerbsfähigkeit ist es daher erforderlich, die Entwicklungskosten und die für die Entwicklung benötigte Zeit immer weiter zu senken.

Das Problem der Entwicklung komplex aufgebauter Produkte wird weiterhin dadurch verschärft, dass - wie bereits erwähnt worden ist - derartige komplexe Gesamtprodukte aus einer Vielzahl von einzelnen Bauteilen bestehen, die häufig an unterschiedlichen geographischen Orten entwickelt werden. Zur Erzeugung des digitalen Abbilds, d.h. des "Digital Mockups", des Gesamtprodukts ist daher ein Datenaustausch zwischen den einzelnen Entwicklungsstellen erforderlich. Zu wichtigen Projektmeilensteinen können die digitalen Bilddaten der einzelnen Bauteile gesammelt und aufeinander abgestimmt werden. Dieser Prozess ist jedoch sehr zeitintensiv und fehleranfällig. Zudem kann die Zusammensetzung des Entwicklungsteams von Modell zu Modell sowie das an den einzelnen Entwicklungsstandorten bzw. für die einzelnen Bauteile verwendete Bilddatenformat unterschiedlich sein, was die Koordination zwischen den einzelnen Entwicklungsstandorten erschwert.

Der vorliegenden Erfindung liegt daher die Aufgabe zugrunde, eine Möglichkeit für die Überprüfung der Baubarkeit eines aus mehreren rechnergestützt konstruierten Bauteilen bestehenden Gesamtprodukts bereitzustellen, so dass das Gesamtprodukt bzw. dessen einzelnen Bauteile effektiver, d.h. kostengünstiger und innerhalb einer kürzeren Zeit, entwickelt bzw. konstruiert werden können, wobei gleichzeitig eine hohe Qualität des Gesamtprodukts gewährleistet sein soll. Insbesondere soll mit Hilfe der vorliegenden Erfindung die Entwicklung bzw. Konstruktion von komplex aufgebauten Gesamtprodukten, deren einzelne Bauteile rechnergestützt an unterschiedlichen geographischen Standorten konstruiert und entwickelt werden, erleichtert werden.

Die oben genannte Aufgabe wird erfindungsgemäß durch ein Verfahren mit den Merkmalen des Anspruchs 1 bzw. ein System mit den Merkmalen des Anspruches 13 gelöst. Die Unteransprüche definieren jeweils bevorzugte und vorteilhafte Ausführungsformen der vorliegenden Erfindung.

Erfindungsgemäß wird davon ausgegangen, dass die einzelnen Bauteile eines Gesamtprodukts rechnergestützt konstruiert und somit für jedes Bauteil digitale Bilddaten erzeugt werden, welche die jeweils augenblickliche Konstruktion dieses Bauteils beschreiben. Die digitalen Bilddaten können insbesondere 3D-CAD-Daten handelsüblicher CAD-Systeme sein. Die Besonderheit der vorliegenden Erfindung besteht darin, dass die digitalen Bilddaten der an unterschiedlichen Arbeitsplätzen bzw. Arbeitsplatzstationen entwickelten Bauteile über ein Datenübertragungsnetz an eine zentrale Stelle übertragen werden, wo die digitalen Bilddaten der einzelnen Bauteile gesammelt und in eine digitale Abbildung des Gesamtprodukts umgesetzt werden. Durch Auswertung dieser digitalen Abbildung des Gesamtprodukts wird schließlich zentral die Baubarkeit des Gesamtprodukts überprüft, indem die geometrische Passform der einzelnen Bauteile in Bezug auf in dem Gesamtprodukt benachbarte Bauteile überprüft wird.

Die Arbeitsplätze, an denen die einzelnen Bauteile des Gesamtprodukts rechnergestützt konstruiert werden, sind in der Regel weit verstreut und können sich an unterschiedlichen Stellen innerhalb eines Gebäudes, in unterschiedlichen Städten und sogar in unterschiedlichen Ländern befinden, sofern sie über das zuvor erwähnte Datenübertragungsnetz mit der zentralen Stelle verbunden sind. Bei dem Datenübertragungsnetz kann es sich insbesondere um ein weltweites Datenübertragungsnetz, welches auch als "World Wide Web" oder "Internet" bezeichnet wird, handeln, so dass die vorliegende Erfindung in Form eines "Web Engineering"-Dienstes angeboten wird. Zu diesem Zweck muss ein Projektteilnehmer bei der zentralen Stelle, dem Anbieter der "Web Engineering"-Anwendung, einen Projektraum buchen, woraufhin ihm ein bestimmter Speicherplatz, Rechnerleistung sowie Werkzeuge oder Funktionen für bestimmte Spezialaufgaben zur Verfügung gestellt werden, wobei die Werkzeuge oder Funktionen ("Tools") auf die einzelnen lokalen Arbeitsplatzrechner für das Internet als sogenannte "Applets" heruntergeladen werden können. Anschließend kann jeder Projektteilnehmer, d.h. jeder ein bestimmtes Bauteil des gewünschten Gesamtprodukts an einem Arbeitsplatz konstruierender Entwickler, die jeweils konstruierten Bauteile über das Internet bei der zentralen Stelle einstellen ("einchecken"), wobei eine Zuordnung der einzelnen Bauteile in den räumlichen Gesamtkontext der Konstruktion erfolgt. Während dieses Prozesses werden die digitalen Bilddaten der einzelnen Bauteile in ein neutrales Datenformat, welches die für die Analyse und Zusammenarbeit notwendigen Informationen enthält, umgewandelt. Dabei handelt es sich um ein angenähertes reduziertes Datenformat, beispielsweise ein tesseliertes Format, so dass es irrelevant ist, in welchem CAD-Format das jeweilige Bauteil entwickelt worden ist. Selbstverständlich können von jedem Projektmitglied auch direkt die Bilddaten in dem tesselierten Format an die zentrale Stelle übertragen werden.

Nachdem auf diese Weise die digitalen Daten der einzelnen Bauteile an die zentrale Stelle bzw. an den "Web Engineering"-Dienstleister übertragen worden sind, werden die digitalen Bilddaten der einzelnen Bauteile zentral zu einer digitalen Abbildung des Gesamtprodukts zusammengefügt und durch Auswertung der digitalen Abbildung die geometrische Passform der einzelnen Bauteile überprüft. Hierbei können beispielsweise mit Hilfe einer sogenannten "Clash and Clearance"-Analyse Bauteilüberschneidungen in dem Gesamtprodukt festgestellt werden. Ebenso können weitere hilfreiche Analysen, wie Hüllenberechnungen, Freiraumberechnungen, Abstandsmessungen ("Distance Range"-Analysen) oder dergleichen durchgeführt werden. Die durchführbaren Analysen beziehen sich dabei nicht nur auf die einzelnen Bauteile, sondern können sich auch auf Betriebsräume (z.B. auf Vibrationsräume bei einem laufenden Motor) oder Bewegungsräume beziehen.

Die zuvor beschriebene Verifizierung oder Überprüfung der Baubarkeit des Gesamtprodukts kann automatisch von der zentralen Stelle in regelmäßigen Abständen auf Grundlage der jeweils aktuell vorliegenden Bilddaten der einzelnen Bauteile durchgeführt werden. Ebenso ist jedoch auch möglich, dass die zur Überprüfung der Baubarkeit des Gesamtprodukts durchzuführenden Berechnungen von einem der Projektteilnehmer ausgehend von seinem Arbeitsplatzrechner über das Internet bzw. das Datenübertragungsnetz bei der zentralen Stelle initiiert werden. Des weiteren können von jedem Projektteilnehmer auch "What-If"-Überprüfungen, d.h. Konstruktionsalternativen unabhängig von dem augenblicklichen Status des Gesamtprodukts, durchgeführt werden.

Die Ergebnisse der zentral durchgeführten Verifizierung können von jedem Projektteilnehmer über das Datenübertragungsnetz bei der zentralen Stelle abgefragt werden.

Um den Zugriff auf die von der zentralen Stelle angebotenen Funktionen bzw. dort zentral gespeicherten Daten zu steuern, können für jeden Projektbeteiligten bzw. Projektteilnehmer, d.h. für jeden Entwickler oder dergleichen, individuelle Zugriffsrechte eingerichtet werden, so dass sichergestellt ist, dass jeder Projektteilnehmer nur auf diejenigen Bauräume und diejenigen Informationen zugreifen darf, für welche er autorisiert ist.

Vorteilhafterweise wird von der zentralen Stelle nach Durchführung einer Verifizierung automatisch eine Rückmeldung an die einzelnen Projektteilnehmer über das Ergebnis der Überprüfung bzw. Verifizierung des Gesamtprodukts erzeugt. Dabei ist es insbesondere vorteilhaft, wenn die Rückmeldung nur an diejenigen Entwickler über das Datenübertragungsnetz versandt wird, für deren Bauteile Kollisionen oder sonstige Probleme festgestellt worden sind. Die Rückmeldung kann beispielsweise in Form von digitalen Bilddaten erfolgen, welche an dem jeweils adressierten Arbeitsplatz automatisch in eine insbesondere miniaturisierte Abbildung des jeweils kollidierenden Bauteils umgesetzt und auf dem Bildschirm des Arbeitsplatzrechners für den jeweiligen Projektteilnehmer sichtbar dargestellt wird. Derartige miniaturisierte Abbildungen sind auch unter der Bezeichnung "Thumbnail"-Darstellungen bekannt, wobei jeder Projektteilnehmer durch Selektieren der auf seinem Bildschirm dargestellten miniaturisierten Abbildung (beispielsweise durch Anklicken mit der Computermaus) die miniaturisierte Abbildung in eine große Abbildung umsetzen kann. Sowohl in der miniaturisierten Abbildung als auch in der entsprechenden großen Abbildung sind die von der zentralen Stelle festgestellten Kollisionsstellen für den jeweiligen Projektteilnehmer erkennbar markiert.

Die Zentralstelle erzeugt vorzugsweise automatisch elektronische Mitteilungen (sogenannte "E-Mails"), welche über das Internet bzw. über das jeweils gewählte Datenübertragungsnetz an die einzelnen Projektteilnehmer versandt werden, sobald von einem Projektteilnehmer die digitalen Bilddaten eines neu konstruierten Bauteils oder eines modifizierten Bauteils vorliegen.

Gemäß einem bevorzugten Ausführungsbeispiel der vorliegenden Erfindung ist vorgesehen, dass jeder Projektteilnehmer an die digitalen Bilddaten des von ihm konstruierten Bauteils weitere das jeweilige Bauteil oder das Gesamtprojekt betreffende Informationen oder Dokumente anhängen kann, welche anschließend zusammen mit den digitalen Bilddaten an die zentrale Stelle übermittelt werden. Die zentrale Stelle dient dabei als Vermittler dieser an die digitalen Bilddaten angehängten zusätzlichen Kommunikationsinformationen und sendet diese angehängten Kommunikationsinformationen an alle Arbeitsplätze weiter, an denen Bauteile entwickelt bzw. konstruiert werden, welche sich in dem Gesamtprojekt beispielsweise in unmittelbarer Nachbarschaft zu dem von dem Sender der Kommunikationsinformationen konstruierten Bauteil befinden. Zu diesem Zweck werden Lageinformationen ausgewertet, welche die Lage des jeweils konstruierten Bauteils in dem Gesamtprodukt beschreiben und in den digitalen Bilddaten der einzelnen Bauteile jeweils enthalten sind. Auf diese Weise kann jeder Konstrukteur bzw. Projektteilnehmer die ihn betreffenden bzw. im Gesamtprodukt benachbarten Bauteile identifizieren und bei Bedarf zusätzliche Informationen von Projektteilnehmern über die benachbarten Bauteile erhalten, was eine direkte Abstimmung mit den Kollegen ermöglicht. Diese Art der Zusammenarbeit kann deutlich Zeit und damit auch Kosten sparen. Insgesamt wird auf diese Weise ein Kommunikations- oder Informationskanal über das jeweils verwendete Datenübertragungsnetz definiert, wobei die Verteilung der jeweils an die digitalen Bilddaten angehängten Kommunikationsinformationen insbesondere von der 3D-Geometrie des Gesamtprodukts bzw. des jeweils konstruierten Bauteils sowie dessen Lage in dem Gesamtprodukt abhängig ist.

Die Vorteile der zuvor beschriebenen Erfindung sind mannigfaltig. Die vorliegende Erfindung ermöglicht eine schnelle Initiierung eines für alle Beteiligten sicheren virtuellen Projektrahmens, wobei ein direkter Zugriff auf Werkzeuge oder Steuermodule (Softwaremodule) zur Entwicklung und Verwaltung des virtuellen Projektraums sowie zur rechnergestützten Konstruktion der einzelnen Bauteile und der Übertragung der daraus resultierenden Bilddaten an die zentrale Stelle bereitgestellt wird. Wird die vorliegende Erfindung in Form eines "Web Engineering"-Dienstes bereitgestellt, können die für die Entwicklung komplex aufgebauter Gesamtprojekte erforderlichen Kosten minimiert werden, da die "Web Engineering"-Dienstleistung, welche zudem an allen sieben Tagen einer Woche ganztägig zur Verfügung steht, bedarfsabhängig genutzt werden kann. Umfangreiche und kostenintensive Investitionen sind im Vorfeld nicht erforderlich.

Innerhalb des virtuellen Projektraums kann die zuvor erwähnte bauteilorientierte Kommunikation erfolgen, was eine besonders effiziente Kommunikation zwischen den einzelnen Projektbeteiligten zur Folge hat. Der virtuelle Projektraum wird kontinuierlich aktualisiert, indem neu entwickelte oder modifizierte Bauteile zentral erfasst und verwaltet sowie verifiziert werden. Dabei werden CAD-Daten unterschiedlicher CAD-Systeme unterstützt. Neben CAD-Geometrien der einzelnen Bauteile können auch Betriebs- und Bewegungsräume zentral analysiert werden, wobei durch die zahlreich bereitgestellten Analysefunktionen die Qualität des Endprodukts gewährleistet ist. Insbesondere wird eine vollständige Analyse des Gesamtprodukts zentral unabhängig von der Größe und der Anzahl der Bauteile durchgeführt, wobei Konstruktions- und Designfehler in einer sehr frühen Projektphase erkannt werden können.

Die vorliegende Erfindung ist allgemein zur Beurteilung der Baubarkeit komplex aufgebauter Produkte geeignet. Insbesondere kann die vorliegende Erfindung auf dem Bereich des allgemeinen Maschinenbaus, des Sondermaschinenbaus, des Formen- und Werkzeugbaus, z.B. in der Kraftfahrzeug-, Luft/Raumfahrt- und Schiffsbauindustrie angewendet werden. Ebenso ist die vorliegende Erfindung auf Produkte im Bereich der "Consumer Electronic", der Konsumgüterindustrie (Haushaltsgeräte) oder des Anlagen- und Apparatebaus etc. anwendbar.

Die vorliegende Erfindung wird nachfolgend anhand bevorzugter Ausführungsbeispiele unter Bezugnahme auf die beigefügte Zeichnung näher erläutert.

Figur 1 zeigt ein vereinfachtes Blockschaltbild zur Erläuterung eines ersten Ausführungsbeispiels der vorliegenden Erfindung, und

Figur 2 zeigt ein vereinfachtes Blockschaltbild zur Erläuterung eines zweiten Ausführungsbeispiels der vorliegenden Erfindung.

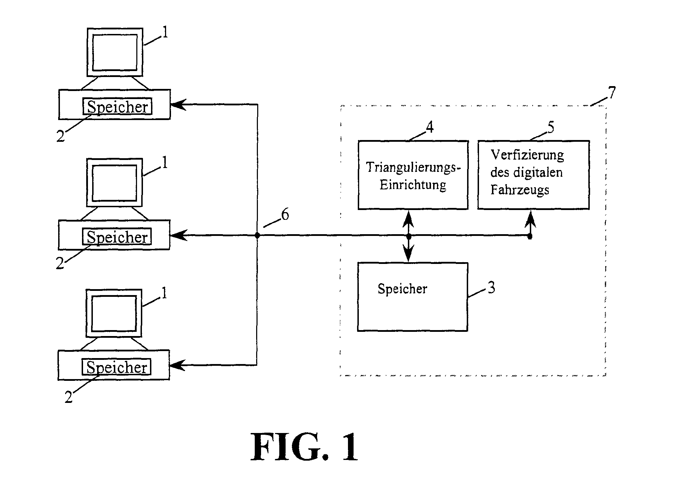

Bei dem in Figur 1 gezeigten System werden die einzelnen Bauteile eines Gesamtprodukts, beispielsweise eines Autos oder Flugzeugs, an unterschiedlichen Arbeitsplätzen 1 rechnergestützt konstruiert. Die in Figur 1 gezeigten Arbeitsplatzrechner 1 entsprechen dabei CAD-Systemen, welche zur augenblicklich gültigen Konstruktion des entsprechenden Bauteils digitale 3D-CAD-Bilddaten erzeugen und diese digitalen Bilddaten in Speichern 2 abspeichern, wobei die Speicher 2 in der Regel durch handelsübliche Massenspeicher (Festplatten) gebildet sind.

Die Arbeitsplatzrechner 1 können im Prinzip weltweit verstreut angeordnet sein, wobei jeder Arbeitsplatzrechner 1 über ein Datenübertragungsnetz 6, insbesondere über das Internet, mit einer zentralen Stelle bzw. einer Zentraleinheit 7 verbunden ist. Das Datenübertragungsnetz 6 kann sowohl kabelgebunden als auch kabellos ausgestaltet sein. Entscheidend allein ist, dass eine Datenübertragung zwischen den Arbeitsplatzrechnern 1 und der Zentraleinheit 7 möglich ist, wozu in den Arbeitsplatzrechnern 1 und der Zentraleinheit 7 entsprechende Schnittstellen integriert sein müssen.

Die an den geographisch verteilt angeordneten Arbeitsplatzrechnern 1 konstruierten Bauteile sind Bestandteil eines Gesamtprodukts, so dass die einzelnen Bauteile innerhalb des Gesamtprodukts zusammenpassen müssen, ohne dass Kollisionen auftreten. Zur Überprüfung bzw. Verifizierung der Baubarkeit des Gesamtprodukts bzw. der geometrischen Passform der einzelnen an den Arbeitsplatzrechnern 1 konstruierten Bauteile ist die Zentraleinheit 7 vorgesehen, welche diese Funktionen in Form einer netz- oder webbasierten Dienstleistung anbietet.

Soll beispielsweise ein neues Produkt entwickelt werden, kann der Projektleiter des Entwicklungsteams ausgehend von einem der Arbeitsplatzrechner 1 über das Datenübertragungsnetz bzw. Internet 6 bei der Zentraleinheit 7 einen virtuellen Projektraum einrichten, wodurch ein bestimmter Umfang an Rechnerleistung, ein bestimmter Speicherplatz sowie bestimmte Werkzeuge und Softwaremodule für die rechnergestützte Konstruktion der einzelnen Bauteile sowie für die Unterstützung der Kommunikation zwischen den einzelnen Arbeitsplatzrechnern 1 und der Zentraleinheit 7 von der Zentraleinheit 7 zur Verfügung gestellt werden. Diese Werkzeuge und Softwaremodule können anschließend von jedem Arbeitsplatzrechner 1 aus über das Internet 6 heruntergeladen werden, wobei in der Regel nur die unbedingt notwendigen Funktionalitäten heruntergeladen werden. Von dem Projektleiter können für die einzelnen Projektteilnehmer, d.h. für die einzelnen an den Arbeitsplatzrechnern 1 arbeitenden Entwickler, individuelle Zugriffsrechte definiert werden, so dass innerhalb des virtuellen Projektraums den einzelnen Projektteilnehmern individuelle Bauräume zugeordnet und lediglich Zugriffe auf bestimmte Informationen gewährt werden. Die Zugriffsrechte werden dabei jeweils von der Zentraleinheit nach dem Einwählen oder Einloggen des jeweiligen Entwicklers überwacht.

Wurde auf zuvor beschriebene Weise ein virtueller Projektraum bei der Zentraleinheit 7 eingerichtet, werden die einzelnen Projektbeteiligten bzw. Arbeitsplatzrechner 1 beispielsweise per E-Mail davon in Kenntnis gesetzt, so dass anschließend von den einzelnen Arbeitsplatzrechnern 1 aus auf den bei der Zentraleinheit 7 eingerichteten Projektraum zugegriffen werden kann.

An den einzelnen Arbeitsplatzrechnern 1 werden die einzelnen Bauteile des Gesamtprodukts in einem arbeitsplatzspezifischen CAD-System konstruiert und die der jeweils augenblicklichen Konstruktion entsprechenden digitalen Bilddaten mittels eines Upload über das Internet 6 bei der Zentraleinheit 7 eingecheckt. Die von den einzelnen Arbeitsplatzrechnern 1 empfangenen Bilddaten werden in einem Speicher bzw. einer Datenbank 3 gesammelt. In der Regel werden an jedem Arbeitsplatzrechner 1 unterschiedliche CAD-Systeme eingesetzt, d.h. für jedes Bauteil wird vorzugsweise dasjenige CAD-System verwendet, welches am besten für die Konstruktion dieses Bauteils geeignet ist. Demzufolge werden von den einzelnen Arbeitsplatzrechnern 1 für die einzelnen Bauteile digitale Bilddaten angeboten, welche in unterschiedlichen Datenformaten vorliegen können. Aus diesem Grund umfasst die Zentraleinheit 7 ein Modul bzw. eine Einrichtung 4, welche die das jeweilige Bauteil exakt beschreibenden Bilddaten der einzelnen Arbeitsplatzrechner 1 aus den unterschiedlichen CAD-Systemen beispielsweise durch Triangulierung in ein neutrales, angenähertes Datenformat konvertiert, welches auf das Wesentliche reduziert ist. Somit ist es irrelevant, in welchem CAD-Format die einzelnen Bauteile entwickelt worden sind. Selbstverständlich können auch die Arbeitsplatzrechner 1 derart ausgestaltet sein, dass die digitalen Bilddaten des jeweils konstruierten Bauteils nur in dem tesselierten Format an die Zentraleinheit 7 übertragen werden. Diese Vorgehensweise kann insbesondere dann vorteilhaft sein, wenn der jeweilige Projektteilnehmer nicht die tatsächliche exakte ursprüngliche Konstruktion seines Bauteils außer Haus geben will.

Die Zentraleinheit 7 umfasst eine Verifizierungseinrichtung 5, welche aus den tesselierten digitalen Bilddaten der einzelnen Bauteile eine digitale Abbildung des Gesamtprodukts, den sogenannten "Digital Mockup" (DMU), erzeugt und in dem Speicher 3 ablegt. Durch Auswertung dieser digitalen Abbildung des Gesamtprodukts kann die Verifizierungseinrichtung 5 mögliche Kollisionen oder Probleme zwischen den einzelnen Bauteilen feststellen. Dabei überprüft die Verifizierungseinrichtung 5 nicht nur die einzelnen CAD-Geometrien der Bauteile, sondern auch mögliche Betriebs- und Bewegungsräume. Insbesondere werden in der digitalen Abbildung bzw. in dem digitalen Prototypen des zu entwickelnden Gesamtprodukts benachbarte Bauteile hinsichtlich möglicher Kollisionen und hinsichtlich der Einhaltung vorgegebener Mindestabstände vollautomatisch überprüft. Darüber hinaus ist die Verifizierungseinrichtung 5 derart ausgestaltet, dass sie neben dem zuvor beschriebenen sogenannten statischen Geometriecheck auch eine dynamische Überprüfung der Ein- und Ausbauwege der einzelnen Bauteile sowie der eingesetzten Werkzeuge durchführt, um mögliche Probleme bei der Montage der Bauteile festzustellen. Die bei dieser Verifizierung gefundenen kollisionsfreien Ein- und Ausbauwege können anschließend von der Verifizierungseinrichtung in Form eines Hüllvolumens dargestellt werden, wobei jedes Hüllvolumen in dem digitalen Prototypen einem statischen Platzhalter entspricht, welcher jeden Konstrukteur auf einen freizuhaltenden Bauraum hinweist.

Die zuvor beschriebene Verifizierung des Gesamtprodukts kann von der Zentraleinheit 7 bzw. der Verifizierungseinrichtung 5 automatisch in regelmäßigen Abständen auf Grundlage der jeweils zuvor von den Arbeitsplatzrechnern 1 übertragen digitalen Bilddaten durchgeführt werden. Ebenso ist jedoch auch denkbar, dass ein Projektteilnehmer von seinem Arbeitsplatzrechner 1 aus eine neue Verifizierung des Gesamtprodukts oder eines Teils davon, für welches er beispielsweise verantwortlich ist, initiiert.

Von der Verifizierungseinrichtung 5 werden alle Geometrie-Unstimmigkeiten, wie insbesondere Kollisionen oder nicht eingehaltene Mindestabstände identifiziert und mit Hilfe eines entsprechenden Ergebnismanagementsystems verwaltet und festgehalten. Dabei wird von der Verifizierungseinrichtung 5 ausgenützt, dass für jedes Bauteil auch dessen Nachbarbauteile bekannt sind, so dass nur diese in die Berechnungen zu einem Bauteil einbezogen werden müssen. Die Ergebnisse der Verifizierung werden ebenfalls in dem Speicher bzw. der Datenbank 3 abgespeichert und sind von den Arbeitsplatzrechnern 1 aus für die einzelnen Projektteilnehmer einsehbar. Zur Erstellung der digitalen Abbildung des Gesamtprodukts durch die Verifizierungseinrichtung 5 ist erforderlich, dass von den einzelnen Arbeitsplatzrechnern 1 digitale 3D-CAD-Bilddaten geliefert werden, welche unter anderem die Lage des jeweiligen Bauteils im Bezug auf das Gesamtprodukt definieren. Auf diese Weise ist der Verifizierungseinrichtung 5 stets bekannt, welche Bauteile innerhalb des Gesamtprodukts zueinander benachbart sind.

Diese Tatsache kann ausgenützt werden, um einen von der Lage der Bauteile abhängigen Kommunikationskanal zwischen den einzelnen Projektteilnehmern zu definieren. Zu diesem Zweck können von jedem Projektteilnehmer an seinem Arbeitsplatzrechner 1 beliebige andere, das jeweilige Bauteil oder Gesamtprodukt betreffende Informationen oder Daten an die eigentlichen an die Zentraleinheit 7 zu übertragenden digitalen Bilddaten angehängt werden. Dabei kann es sich beispielsweise um Textdokumente, Graphiken oder dergleichen handeln. Die Zentraleinheit 7 ist derart ausgestaltet, dass sie in Abhängigkeit von der Lage des jeweiligen Bauteils in dem Gesamtprodukt diese von einem Arbeitsplatzrechner 1 empfangenen zusätzlichen Kommunikationsdaten über das Datenübertragungsnetz 6 automatisch an diejenigen Projektteilnehmer bzw. Arbeitsplatzrechner 1 weiterleitet, an denen Bauteile konstruiert werden, die in dem Gesamtprodukt benachbart zu dem von dem Sender der zusätzlichen Kommunikationsdaten konstruierten Bauteile angeordnet sind. Auf diese Weise ist eine direkte Kommunikation zwischen den an benachbarten Bauteilen arbeitenden Konstrukteuren oder Projektteilnehmern ermöglicht, ohne dass den einzelnen Projektteilnehmern bekannt sein muss, an welcher Stelle die benachbarten Bauteile konstruiert werden.

Wie zuvor erläutert worden ist, werden von der Verifizierungseinrichtung 5 automatisch Problem- oder Kollisionsstellen ermittelt und visuell dargestellt. Vorteilhaft ist es, wenn an die einzelnen Arbeitsplatzrechner 1 nur diejenigen Probleme mitgeteilt werden, die für den jeweiligen Projektteilnehmer relevant sind. Zu diesem Zweck kann für jeden Projektteilnehmer bzw. Arbeitsplatzrechner von der Verifizierungseinrichtung 5 automatisch ein Bericht über die mit dem entsprechenden Bauteil zusammenhängenden Problem- oder Kollisionsstellen erstellt werden, der dann von der Zentraleinheit 7 über das Datenübertragungsnetz 6 an den entsprechenden Arbeitsplatzrechner in Form einer elektronischen Mitteilung ("E-Mail") übertragen wird oder von dem Arbeitsplatzrechner 1 aus beim "Einloggen" abgefragt werden kann.

Besonders vorteilhaft ist es, wenn zudem automatisch eine Abbildung der Kollisionsstellen aufweisenden Bauteile erzeugt und zusammen mit einer Darstellung der entsprechenden Kollisionsstellen zur Verfügung gestellt wird. Zu diesem Zweck erzeugt die Zentraleinheit 7 von allen Bauteilen, welche in den virtuellen Projektraum hochgeladen werden, eine Bilddatei, welche das jeweilige Bauteil in einer geeigneten Ansicht darstellt, wobei die Feinheit der Darstellung so gewählt ist, dass selbst bei einem gleichzeitigen Herunterladen mehrerer derartiger Bilder auf einen Arbeitsplatzrechner 1 und bei hoher Netzbelastung ein ausreichend schneller Ladevorgang möglich ist. In diesem digitalen Bild jedes Bauteils werden zudem die mit dem jeweiligen Bauteil verbundenen und von der Verifizierungseinrichtung 5 ermittelten Probleme bzw. Kollisionsstellen abgebildet, was dem Anwender ermöglicht, sehr schnell einen ersten Eindruck über die entsprechenden Probleme zu bekommen. Diese Art der Darstellung kann auch ausgedehnt werden auf die Erzeugung von Bildern ganzer Baugruppen oder sogar des Gesamtprodukts, was für den jeweiligen Anwender die Orientierung im Gesamtprodukt weiter erleichtern würde.

Jeder Projektteilnehmer kann somit von seinem Arbeitsplatzrechner 1 aus eine digitale Abbildung des von ihm konstruierten Bauteils von der Zentraleinheit 7 herunterladen und auf seinem Arbeitsplatzrechner 1 anzeigen, wobei in dieser digitalen Darstellung des jeweils konstruierten Bauteils zugleich die mit diesem Bauteil augenblicklich verbunden Kollisionsstellen angezeigt werden. Analog zu dem zuvor beschriebenen Fall eines Berichts, der von der Verifizierungseinrichtung 5 automatisch an einen entsprechenden Arbeitsplatzrechner 1 versandt wird, kann auch die zuvor erwähnte digitale Abbildung des Bauteils mit der Darstellung der Kollisionsstellen von der Verifizierungseinrichtung 5 bei Feststellen eines Problems oder einer Kollision automatisch in Form einer entsprechenden Bilddatei an den jeweiligen Arbeitsplatzrechner 1 übertragen und dort von dem jeweiligen Projektteilnehmer geöffnet werden. Diesbezüglich ist auch denkbar, diese automatisch an den Arbeitsplatzrechner 1 gesandte Abbildung des Kollisionsstellen aufweisenden Bauteils auf dem Bildschirm des jeweiligen Arbeitsplatzrechners 1 in Form einer miniaturisierten Darstellung ("Thumbnail"-Darstellung) anzuzeigen, wobei dieses miniaturisierte Bild von dem jeweiligen Projektteilnehmer beispielsweise durch Anklicken mit der Computermaus vergrößert werden kann, um die von der Verifizierungseinrichtung 5 gefundenen Kollisionsstellen genauer betrachten zu können.

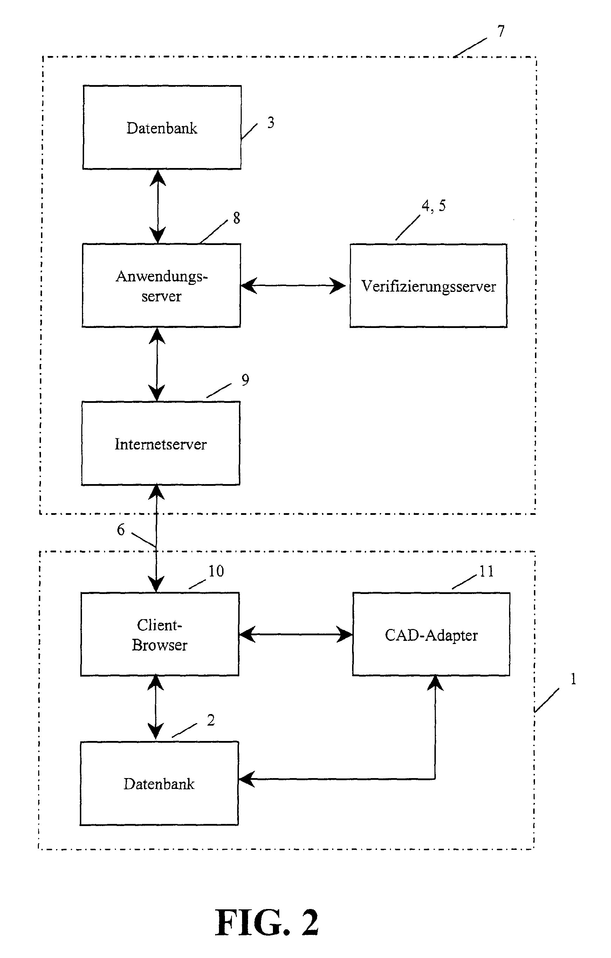

In Figur 2 ist ein zweites Ausführungsbeispiel der vorliegenden Erfindung zur Verdeutlichung der Kommunikation zwischen der Zentraleinheit 7 und einem der Arbeitsplatzrechner 1 dargestellt.

Wie aus Figur 2 ersichtlich ist, sind die Funktionen der in Figur 1 dargestellten Triangulierungseinrichtung 4 und der Verifizierungseinrichtung 5 auf einen Verifizierungsserver ausgegliedert. Der Verifizierungsserver kommuniziert über einen Anwendungsserver 8 mit einem Internetserver 9, wobei der Internetserver 9 den Zugang zu dem Internet 6 bereitstellt. Der Anwendungsserver 8 greift auf eine Datenbank 3 zu, in der sämtliche digitale Bauteiledaten, welche von den einzelnen Arbeitsplatzrechnern 1 empfangen werden, sowie die entsprechenden Daten in dem tesselierten Format gespeichert werden. Bei der Datenbank 3 handelt es sich um eine räumlich organisierte Datenbank, welche sofort die vollständige Umgebungsinformation zu jedem Bauteil errechnet. Damit ist sichergesellt, dass für jedes Bauteil jederzeit ein aktueller und sicherer Stand über eventuelle Konflikte mit anderen Bauteilen vorliegt. Kollisionen, Durchdringungen und Abstandsunterschreitungen werden sofort beim Speichern zuverlässig ermittelt. Jeder Konstrukteur weiß auf diese Weise für jedes seiner Bauteile den aktuellen Stand seiner Umgebung, kennt seine Ansprechpartner und weiß, mit wem er sich abstimmen muss. Bei Änderungen eines Bauteils können somit automatische alle betroffenen Projektteilnehmer informiert werden. Die rein räumlich organisierte Darstellung der einzelnen Bauteile eignet sich neben den reinen Konstruktionsdaten genauso für weitere räumliche Beschreibungen, wie Ersatzgeometrien, Bewegungsräume für Ein/Ausbau oder Betriebeswege, sowie für einfache Bauraumreservierungen für spätere zu konstruierende Bauteile oder andere Größen, wie beispielsweise ein Werkzeug.

Der Verifizierungsserver ist - wie bereits erwähnt worden ist - für die Umsetzung der von einzelnen Arbeitsplatzrechnern empfangenen CAD-Bilddaten in das tesselierte Bilddatenformat verantwortlich und führt die bereits erwähnten Analysen zur Bestimmung möglicher Kollisionen zwischen benachbarten Bauteilen innerhalb der daraus resultierenden digitalen Abbildung des Gesamtprodukts durch. Die Bauteilgeometrien in dem tesselierten Format sowie die Ergebnisse der Kollisionsüberprüfung können beispielsweise über den Internetserver 9 im VRML-Format auf den Arbeitsplatzrechner 1 heruntergeladen werden.

Wie aus Figur 2 ersichtlich ist, umfasst bei dem dargestellten Ausführungsbeispiel der Arbeitsplatzrechner 1 einen Client-Browser 10, welcher den Zugriff auf das Internet 6 durch den Arbeitsplatzrechner 1 ermöglicht. Des weiteren ermöglicht der Client-Browser 10 eine interaktive Kommunikation mit der Zentraleinheit 7. Der Client-Browser greift auf eine Datenbank 2 zu, in der - wie auch in Figur 1 gezeigt ist - die digitalen Bilddaten des an dem entsprechenden Arbeitsplatzrechner 1 konstruierten Bauteils gespeichert sind. Des weiteren können in dieser Datenbank 2 auch sämtliche von der Zentraleinheit 7 heruntergeladene Daten abgelegt werden. In Figur 2 ist hinsichtlich des Arbeitsplatzrechners 1 zusätzlich ein CAD-Adapter 11 dargestellt, welcher von dem Arbeitsplatzrechner 1 aus beispielsweise von der Zentraleinheit 7 in Form eines entsprechenden Softwaremoduls heruntergeladen und in dem Arbeitsplatzrechner 1 installiert werden kann. Mit Hilfe dieses CAD-Adapters 11 wird unter anderem die rechnergestützte Konstruktion des jeweils zu konstruierenden Bauteils unter Berücksichtung der Datenerfordernisse der Zentraleinheit 7 unterstützt.

Ansonsten wirken der Arbeitsplatzrechner 1 und die Zentraleinheit 7 über die in Figur 2 gezeigte Internet-Verbindung 6 wie zuvor anhand Figur 1 beschrieben zusammen.

## Patentansprüche

1. Verfahren zum automatischen Überprüfen der Baubarkeit eines aus mehreren rechnergestützt konstruierten Bauteilen bestehenden Gesamtprodukts,
wobei die einzelnen Bauteile rechnergestützt an verschiedenen Arbeitsplätzen (1) konstruiert und dabei jeweils entsprechende digitale Bilddaten erzeugt werden,
**dadurch gekennzeichnet,**
**dass** die den einzelnen Bauteilen entsprechenden digitalen Bilddaten über ein Datenübertragungsnetz (6) an eine Zentraleinheit (7) übertragen werden,
**dass** die digitalen Bilddaten der einzelnen Bauteile von der Zentraleinheit (7) zu einer digitalen Abbildung des Gesamtprodukts zusammengefügt werden, und
**dass** die geometrische Passform der einzelnen Bauteile von der Zentraleinheit (7) durch Auswertung der digitalen Abbildung überprüft wird.

2. Verfahren nach Anspruch 1,
**dadurch gekennzeichnet,**
**dass** das Datenübertragungsnetz (6) ein weltweites Datennetz ist.

3. Verfahren nach Anspruch 1 oder 2,
**dadurch gekennzeichnet,**
**dass** die digitalen Bilddaten der einzelnen Bauteile in unterschiedlichen Bilddatenformaten erzeugt und vor der Erzeugung der digitalen Abbildung des Gesamtprodukts in ein angenähertes Bilddatenformat mit reduziertem Datenumfang umgesetzt werden.

4. Verfahren nach einem der vorhergehenden Ansprüche,
**dadurch gekennzeichnet,**
**dass** von der Zentraleinheit (7) Programm- und/oder Steuerdaten an die einzelnen Arbeitsplätze (1) zur rechnergestützten Konstruktion der einzelnen Bauteile und/oder zur Unterstützung des Zusammenwirkens zwischen der Zentraleinheit (7) und dem jeweiligen Arbeitsplatz (1) übertragen werden.

5. Verfahren nach einem der vorhergehenden Ansprüche,
**dadurch gekennzeichnet,**
**dass** in der Zentraleinheit (7) die digitalen Bilddaten der einzelnen Bauteile bzw. der digitalen Abbildung des Gesamtprodukts und/oder Ergebnisdaten über das Ergebnis der durchgeführten Überprüfung der geometrischen Passform der einzelnen Bauteile gespeichert werden, und
**dass** für die einzelnen Arbeitsplätze (1) individuelle Zugriffsrechte für einen Zugriff von dem jeweiligen Arbeitsplatz (1) aus auf die in der Zentraleinheit (7) gespeicherten Daten über das Datenübertragungsnetz (6) definiert werden.

6. Verfahren nach einem der vorhergehenden Ansprüche,
**dadurch gekennzeichnet,**
**dass** von der Zentraleinheit (7) automatisch eine Rückmeldung über das Datenübertragungsnetz (6) an diejenigen Arbeitsplätze (1) erzeugt wird, für deren Bauteile, welche an den jeweiligen Arbeitsplätzen (1) rechnergestützt konstruiert worden sind, eine Kollision bei der von der Zentraleinheit (7) durchgeführten Überprüfung festgestellt worden ist.

7. Verfahren nach Anspruch 6,
**dadurch gekennzeichnet,**
**dass** die Rückmeldung über das Datenübertragungsnetz in Form einer Abbildung des eine Kollision aufweisenden Bauteils erfolgt, wobei in der Abbildung bei der Überprüfung festgestellte Kollisionsstellen entsprechend markiert sind.

8. Verfahren nach Anspruch 7,
**dadurch gekennzeichnet,**
**dass** die Abbildung des kollidierenden Bauteils automatisch von der Zentraleinheit (7) erzeugt, über das Datenübertragungsnetz (6) an den entsprechenden Arbeitsplatz, wo das jeweilige Bauteil rechnergestützt konstruiert worden ist, übertragen und dort in Form einer miniaturisierten Abbildung dargestellt wird.

9. Verfahren nach einem der vorhergehenden Ansprüche,
**dadurch gekennzeichnet,**
**dass** die Zentraleinheit (7) automatisch an die einzelnen Arbeitsplätze (1) eine Mitteilung über das Datenübertragungsnetz (6) sendet, wenn von einem Arbeitsplatz (1) digitale Bilddaten eines neues Bauteils oder eines modifizierten Bauteils an die Zentraleinheit (7) übertragen worden sind.

10. Verfahren nach einem der vorhergehenden Ansprüche,
**dadurch gekennzeichnet,**
**dass** von einem bestimmten Arbeitsplatz (1) zusammen mit den digitalen Bilddaten des dort rechnergestützt konstruierten Bauteils Kommunikationsdaten an die Zentraleinheit (7) über das Datenübertragungsnetz (6) übertragen werden, und
**dass** von der Zentraleinheit (7) die Kommunikationsdaten über das Datenübertragungsnetz (6) automatisch in Abhängigkeit von der räumlichen Lage des von dem bestimmten Arbeitsplatz (1) rechnergestützt konstruierten Bauteils in dem Gesamtprodukt an weitere Arbeitsplätze (1) weitergeleitet werden.

11. Verfahren nach Anspruch 10,
**dadurch gekennzeichnet,**
**dass** die von einzelnen Arbeitsplätzen (1) an die Zentraleinheit (7) übermittelten digitalen Bilddaten räumliche Lageinformationen über die räumliche Lage des von dem jeweiligen Arbeitsplatz (1) rechnergestützt konstruierten Bauteils in dem Gesamtprodukt umfassen, und
**dass** die Zentraleinheit (7) diejenigen Arbeitsplätze (1), welche zum Empfang der von dem bestimmten Arbeitsplatz gesandten Kommunikationsdaten vorgesehen sind, durch Auswertung der räumlichen Lageinformationen der einzelnen Bauteile feststellt.

12. Verfahren nach Anspruch 10 oder 11,
**dadurch gekennzeichnet,**
**dass** die Zentraleinheit (7) die von dem bestimmten Arbeitsplatz (1) empfangenen Kommunikationsdaten automatisch an diejenigen weiteren Arbeitsplätze (1) über das Datenübertragungsnetz (6) weiterleitet, an denen Bauteile rechnergestützt konstruiert werden, die in dem Gesamtprodukt benachbart zu dem an dem bestimmten Arbeitsplatz (1) rechnergestützten Bauteils angeordnet sind.

13. System zum automatischen Überprüfen der Baubarkeit eines aus mehreren rechnergestützt konstruierten Bauteilen bestehenden Gesamtprodukts,
mit mehreren Bilddaten-Erzeugungseinrichtungen (1) zum rechnergestützten Konstruieren eines Bauteils des Gesamtprodukts und zum automatischen Erzeugen von digitalen Bilddaten des jeweils konstruierten Bauteils,
**dadurch gekennzeichnet,**
**dass** die Bilddaten-Erzeugungseinrichtungen (1) über ein Datenübertragungsnetz (6) mit einer Zentraleinheit (7) verbunden sind,
**dass** die Bilddaten-Erzeugungseinrichtung (1) zur Übertragung der digitalen Bilddaten des jeweils rechnergestützt konstruierten Bauteils über das Datenübertragungsnetz (6) an die Zentraleinheit (7) ausgestaltet sind, und
**dass** die Zentraleinheit (7) Prüfmittel (4, 5) zum Zusammenfügen der digitalen Bilddaten der einzelnen Bauteile zu einer digitalen Abbildung des Gesamtprodukts und zum Überprüfen der geometrischen Passform der einzelnen Bauteile durch Auswertung der digitalen Abbildung aufweist.

14. System nach Anspruch 13,
**dadurch gekennzeichnet,**
**dass** das Datenübertragungsnetz (6) ein weltweites Datennetz ist.

15. System nach Anspruch 13 oder 14,
**dadurch gekennzeichnet,**
**dass** die Bilddaten-Erzeugungseinrichtungen (1) die digitalen Bilddaten des jeweils rechnergestützt konstruierten Bauteils in unterschiedlichen Bilddatenformaten erzeugen, und
**dass** die Prüfmittel Konvertierungsmittel (4) zur Umsetzung der von den einzelnen Bilddaten-Erzeugungseinrichtungen (1) empfangenen digitalen Bilddaten in ein angenähertes Bilddatenformat mit reduziertem Datenumfang aufweisen.

16. System nach einem der Ansprüche 13-15,
**dadurch gekennzeichnet,**
**dass** die Prüfmittel (4, 5) zur automatischen Erzeugung einer Rückmeldung über die durchgeführte Überprüfung der geometrischen Passform der einzelnen Bauteile ausgestaltet sind, wobei die Prüfmittel bei Feststellen einer Kollision im Laufe der Überprüfung der geometrischen Passform der einzelnen Bauteile automatisch die Rückmeldung an diejenigen Bilddaten-Erzeugungseinrichtungen (1) sendet, von denen Bauteile rechnergestützt konstruiert werden, für die im Laufe der Überprüfung eine Kollision festgestellt worden ist.

17. System nach Anspruch 16,
**dadurch gekennzeichnet,**
**dass** die Prüfmittel (4, 5) derart ausgestaltet sind, dass sie die Rückmeldung in Form einer digitalen Abbildung des betreffenden Bauteils, für welches im Laufe der Überprüfung eine Kollision festgestellt worden ist, an diejenige Bilddaten-Erzeugungseinrichtung (1) senden, von der das betreffende Bauteil rechnergestützt konstruiert worden ist,
wobei in der digitalen Abbildung im Laufe der Überprüfung ermittelte Kollisionsstellen markiert sind.

18. System nach einem der Ansprüche 13-17,
**dadurch gekennzeichnet,**
**dass** die Zentraleinheit (7) derart ausgestaltet ist, dass sie automatisch über das Datenübertragungsnetz (6) an die einzelnen Bilddaten-Erzeugungseinrichtungen (1) eine Mitteilung sendet, wenn von einer Bilddaten-Erzeugungseinrichtung (1) digitale Bilddaten eines neu konstruieren Bauteils oder eines modifizierten Bauteils empfangen worden sind.

19. System nach einem der Ansprüche 13-18,
**dadurch gekennzeichnet,**
**dass** die Bilddaten-Erzeugungseinrichtungen (1) derart ausgestaltet sind, dass zusammen mit den digitalen Bilddaten des jeweils rechnergestützt konstruierten Bauteils Kommunikationsdaten über das Datenübertragungsnetz (6) an die Zentraleinheit (7) übertragen werden, und
**dass** die Zentraleinheit (7) derart ausgestaltet ist, dass sie die von einer bestimmten Bilddaten-Erzeugungseinrichtung (1) empfangenen Kommunikationsdaten über das Datenübertragungsnetz (6) an mindestens eine weitere Bilddaten-Erzeugungseinrichtung (1) in Abhängigkeit von der räumlichen Lage des von der bestimmten Bilddaten-Erzeugungseinrichtung (1) rechnergestützt konstruierten Bauteils in dem Gesamtprodukt weiterleitet.

20. System nach Anspruch 19,
**dadurch gekennzeichnet,**
**dass** die Zentraleinheit (1) die von der bestimmten Bilddaten-Erzeugungseinrichtung (1) empfangenen Kommunikationsdaten an diejenigen weiteren Bilddaten-Erzeugungseinrichtungen (1) weiterleitet, von denen Bauteile rechnergestützt konstruiert werden, welche in dem Gesamtprodukt benachbart zu dem von der bestimmten Bilddaten-Erzeugungseinrichtung konstruierten Bauteil angeordnet sind.

21. Zentraleinheit zum automatischen Überprüfen der Baubarkeit eines aus mehreren rechnergestützt konstruierten Bauteilen bestehenden Gesamtprodukts,
wobei von den einzelnen Bauteilen digitale Bilddaten von entsprechenden Bilddaten-Erzeugungseinrichtungen (1), welche zum rechnergestützten Konstruieren des jeweils entsprechenden Bauteils vorgesehen sind, vorliegen,
**dadurch gekennzeichnet,**
**dass** die Zentraleinheit (7) Schnittstellenmittel (9) zum Anschluss der Zentraleinheit (7) an ein Datenübertragungsnetz (6) zum Empfangen der digitalen Bilddaten der einzelnen Bauteile aufweist, und
**dass** die Zentraleinheit (7) zur Durchführung des Verfahrens nach einem der Ansprüche 1-12 bzw. gemäß einem der Ansprüche 13-20 ausgestaltet ist.
